Europäisches Patentamt

European Patent Office

Office européen des brevets

(19)

(11) **EP 0 436 950 B2**

(12) **NEUE EUROPÄISCHE PATENTSCHRIFT**

(45) Veröffentlichungstag und Bekanntmachung des Hinweises auf die Entscheidung über den Einspruch:
**30.06.1999 Patentblatt 1999/26**

(51) Int Cl.⁶: **D03D 1/00**, D06C 7/02

(45) Hinweis auf die Patenterteilung:
**26.05.1993 Patentblatt 1993/21**

(21) Anmeldenummer: **90125721.2**

(22) Anmeldetag: **28.12.1990**

(54) **Verfahren zur Herstellung von unbeschichteten Technischen Geweben mit geringer Luftdurchlässigkeit**

Method for the manufacture of uncoated technical woven fabrics with low air permeability

Procédé pour la manufacture de tissus techniques non couchés avec perméabilité à l'air faible

(84) Benannte Vertragsstaaten:
**BE DE ES FR GB IT NL SE**

(30) Priorität: **12.01.1990 DE 4000740**
**13.12.1990 DE 4039811**

(43) Veröffentlichungstag der Anmeldung:
**17.07.1991 Patentblatt 1991/29**

(73) Patentinhaber: **Akzo Nobel N.V.**
**6824 BM Arnhem (NL)**

(72) Erfinder:
• **Krummheuer, Wolf, Dr.**
**W-5600 Wuppertal 1 (DE)**
• **Siejak, Volker**
**W-4100 Duisburg (DE)**
• **Graefe, Hans Albert**
**W-5830 Schwelm (DE)**

(56) Entgegenhaltungen:
EP-A- 0 314 867     EP-B- 0 085 972
CA-A- 974 745       DE-A- 3 705 345
US-A- 3 842 583     US-A- 4 445 903
US-A- 4 559 975     US-A- 4 582 747
US-A- 4 590 121     US-A- 4 921 735

• **Dyeing and Finishing of Woven Fabrics containing Terylene or Nylon Filament Yarns - ICI Dyeing, Finishing & Fabric Care Manual**
• **Koch P.A. u. Satlow, G., Grosses Textil-Lexikon, Band A-K, Stuttgart, 1965, S. 599 - 600**
• **Piller, B., Neue Technologien zur Verarbeitung von speziellen Chemiefasern in der Textil-, besonders der Maschenwarenindustrie, Melliand Textilberichte H.8/1975, S. 618-625**
• **BSI (British Standard Aerospace Series) F126:1980**
• **Ernst, R., Wörterbuch der industriellen Technik Bans II, Vierte Auflage, Wiesbaden, 1975, S. 874**
• **Bardhan, M.K., Effect of weaving and processing Parameters on fundamental properties of Nylon Parachute Fabric, Man-made Textiles in India, May 1979, S. 229-243**
• **Auszug aus Eurofabric '89 (Akzo), 28./29.09.1989**
• **Allied Signal Brochure "Boad Woven Products"**
• **An., Air bag fabrics, Chemiefasern/Textilindustrie, vol. 39/91, May 1989, S. E68**
• **Fisher Body Material Specification FBMS 23-29 21st July 1977**
• **Allied Corporation Catalogue "Industrial Yarns"**
• **Peter, M. u. Rouette, H.K., Grundlagen der Textilveredlung, Frankfurt, 1989, S. 452-453.**
• **ICI, Industrial Fibre Manual (1970) 2 Seiten**

EP 0 436 950 B2

**Beschreibung**

Die Erfindung betrifft ein Verfahren zur Herstellung von unbeschichteten Technischen Geweben in dichter Gewebeeinstellung.

Für die Funktion vieler Technischer Gewebe ist die Luftdurchlässigkeit von ausschlaggebender Bedeutung. Als Beispiele hierfür seien Gewebe für Fallschirmstoffe oder Segelgewebe genannt. In besonderem Maße trifft dies für Airbags zu. Die geforderten niedrigen Luftdurchlässigkeiten wurden bei diesen Geweben bislang vorwiegend durch das Aufbringen einer Beschichtung eingestellt.

Beschichtete Gewebe weisen vor allem den Nachteil der gegenüber unbeschichteten höheren Produktionskosten auf. Ein weiterer sehr erheblicher Nachteil, der vor allem für die Verwendung beschichteter Gewebe zur Herstellung von Airbags gilt, ist ein gegenüber unbeschichteten Geweben um mindestens 10 % höheres Faltvolumen. Der Raumbedarf für das Unterbringen des Airbags, zum Beispiel im Lenkrad, ist somit bei beschichteten Geweben höher als bei unbeschichteten. Ein besonderer Nachteil ergibt sich aus der Notwendigkeit, die Beschichtung mit Talkum zu bepudern, um damit Verklebungen der im gefalteten Airbag aneinander anliegenden Beschichtungen zu vermeiden. Beim Auslösen der Airbag-Funktion führt das dann aus dem Airbag austretende Talkum zu einer Belästigung der Fahrzeuginsassen. Außerdem führen Airbags aus unbeschichtetem Gewebe gegenüber solchen aus beschichtetem Gewebe zu einer erheblichen Reduzierung der Masse und verbessern somit die Handlichkeit des Lenkrads.

Aus diesem Grunde wurde versucht, die Beschichtung zu umgehen. Eine Möglichkeit hierzu wird in der EP-A 314 867 für Airbag-Gewebe beschrieben. Hier wird die gewünschte niedrige Luftdurchlässigkeit durch aufeinanderfolgendes Schrumpfen, Thermofixieren und Kalandrieren eingestellt. Diese Behandlungsschritte bedeuten, daß ein sehr umständlicher und aus Kostensicht ungünstiger Ausrüstungsgang in Kauf genommen werden muß. Darüberhinaus ist das in der EP-A 314 867 beschriebene Gewebe für die Airbag-Herstellung kaum geeignet, da mit der vorgesehenen asymmetrischen Gewebeeinstellung (unterschiedliche Fadenzahlen in Kette und Schuß) die Forderungen der Automobilhersteller nach in beiden Fadenrichtungen gleichen Festigkeitswerten nicht erfüllt werden können. Diese ist notwendig, da es bei dem radialsymmetrischen Bauteil Airbag keine bevorzugte Richtung gibt.

Einen anderen Weg schlägt die CA-PS 974 745 vor. Hier werden asymmetrische Gewebe in sehr dichter Einstellung, die aus hitzeschrumpfbaren Synthesefaser-Garnen hergestellt wurden, einer Trocken hitzebehandlung, bevorzugt in einem Spannrahmen, unterzogen. Neben der wegen der aufzuwendenden Energiekosten ungünstigen Kostensituation erfüllen auch die hier beschriebenen Gewebe beim Einsatz für Airbags wegen der gewählten asymmetrischen Gewebeeinstellung nicht die Forderungen der Automobilhersteller im Hinblick auf in Kette und Schuß gleiche Festigkeitswerte.

In der EP-A 336 507 wird ein Verfahren zur Herstellung von Geweben unter Einsatz von extrem hochschrumpfenden Polyesterfasern beschrieben. Die Schrumpfauslösung und Gewebeverdichtung zur Einstellung einer niedrigen Luft- und Wasserdurchlässigkeit erfolgt durch ein Naßverfahren und einen sich daran anschließenden Thermofixierprozeß. Dieses Verfahren kann auch für Technische Gewebe Einsatz finden. Für die meisten Artikel aus diesem Bereich, besonders für Airbag-Gewebe, ist diese Methode jedoch ungeeignet, da mit den hier zum Einsatz kommenden Polyester-Hochschrumpfgarnen die bei Technischen Geweben geforderten hohen Festigkeiten nicht erreicht werden können. Außerdem ergibt der vorgesehene Thermofixierprozeß eine Verteuerung der Produktionskosten und wirkt sich sogar negativ auf die Luftdurchlässigkeit aus.

Es bestand deshalb die Aufgabe, ein kostengünstiges Verfahren zur Herstellung von Technischen Geweben, das nicht nur in der Luftdurchlässigkeit, sondern auch in der Festigkeit die an diese Gewebe gestellten Forderungen voll erfüllt, zu entwickeln. Hierbei sind in erster Linie Gewebe für Airbags von Interesse.

Wenn im Folgenden von Airbag-Geweben gesprochen wird, so sind hiermit besonders die Gewebe für den Kontaktteil des zweiteiligen Airbags gemeint, für die eine besonders niedrige Luftdurchlässigkeit von < 10 l/dm$^2$·min bei 500 Pa Prüfdifferenzdruck gefordert wird. Zum Abfliessen der in den Airbag beim Auslösen der Airbagfunktion einströmenden Luft besitzt der zweiteilige Airbag einen Filterteil mit höherer Luftdurchlässigkeit. Beim einteiligen Airbag werden für das Austreten der Luft Öffnungen in den Airbag eingestanzt. Hier gilt die geforderte niedrige Luftdurchlässigkeit für das gesamte, für den Airbag verwendete Gewebe.

Die oben genannte Aufgabe wird dadurch gelöst, daß ein Gewebe der eingangs beschriebenen Art aus Polyamid-Filamentgarnen mit einem Heißluftschrumpf von 6 - 15 % (gemessen bei 160 °C, entsprechend ASTM 19-525) mit wenigstens im wesentlichen symmetrischer dichter Gewebeeinstellung einer Behandlung in einem wäßrigen Bad in einem Temperaturbereich von 60 - 140 °C unterzogen wird. Hierbei erfolgt eine Schrumpfauslösung, die zu einer weiteren Verdichtung des bereits in dichter Einstellung gewobenen Gewebes und zu einem damit einhergehenden weitgehenden Porenschluß des Gewebes führt. Anschließend erfolgt eine Trocknung ohne Thermofixierung. Auf diese Weise kann die in den Spezifikationen der Automobilhersteller geforderte niedrige Luftdurchlässigkeit von <= 10l/dm$^2$·min bei 500 Pa Prüfdifferenzdruck eingestellt werden.

Für die Behandlung im wäßrigen Bad wird ein Temperaturbereich von 90 - 100 °C besonders bevorzugt, da sich dieser Temperaturbereich im Hinblick auf die angestrebte niedrige Luftdurchlässigkeit als besonders günstig erwiesen hat Diese Temperaturspanne bietet den Vorteil, daß bezüglich der Maschinenauswahl für die Naßpassage geringere Beschränkungen bestehen als bei Temperaturen über 100 °C.

Die durchgeführten Untersuchungen haben gezeigt, daß auch bereits bei 60 °C und darunter bei der Behandlung im wäßrigen Bad eine deutliche Schrumpfauslösung und damit eine Verdichtung des Gewebes, die zu einer Verringerung der Luftdurchlässigkeit führt, eintritt. Mit der Wahl der Behandlungstemperatur kann sogar eine gezielte Steuerung der Luftdurchlässigkeit erfolgen. Dies ist von besonderer Bedeutung, da bei manchen Anwendungen von Technischen Geweben, z. B. für den Filterteil von Airbags, höhere Luftdurchlässigkeiten, beispielsweise in einem Bereich von 40 - 80 l/dm²·min bei 500 Pa Prüfdifferenzdruck, gewünscht werden. Durch die Behandlungstemperatur im wässrigen Bad läßt sich dann, zusammen mit der gewählten Gewebeeinstellung, die Luftdurchlässigkeit von Geweben gezielt einstellen.

Die Behandlung im wäßrigen Bad kann beispielsweise auf allen, für die Breitwäsche in der Textilveredlung zur Verfügung stehenden Maschinen erfolgen. Als günstig haben sich Breitwaschmaschinen erwiesen. Aber auch Jigger sind für derartige Behandlungen geeignet.

Wenn bei Temperaturen über 100 °C gearbeitet wird, so kommt hierfür als Maschine der HT-Jigger in Frage. Hier sind Behandlungstemperaturen bis 140 °C möglich.

Diese Naßbehandlung bewirkt gleichzeitig auch das Entfernen von gegebenfalls vor dem Weben aufgebrachter Schlichte. Dies ist vorteilhaft, um bei dem teilweise sehr langen Lagern von Technischen Geweben, z.B. von Airbags im Lenkrad eines Fahrzeugs, den Bakterienbefall der Gewebe zu vermeiden.

Auch bei Verwendung von gedrehten Garnen in der Kette, die normalerweise ungeschlichtet zum Einsatz gelangen, bewirkt die Behandlung im wäßrigen Bad gleichzeitig die Entfernung der von der Faserherstellung auf dem Garn gegebenenfalls vorhandenen Präparation.

Die bei der Naßpassage zu wählende Behandlungszeit sowie eventuelle Zusätze zum Bad richten sich nach der zu entfernenden Schlichte bzw. Präparation und sind dem Fachmann bekannt.

Das hier beschriebene Verfahren bietet also den Vorteil, daß auf eine sehr einfache und kostengünstige Weise Gewebe mit niedrigen Luftdurchlässigkeiten hergestellt werden können.

Die Trocknung der Gewebe erfolgt bei 130 - 170 °C auf den hierfür üblichen Maschinen. Bevorzugt wird eine Trocknungstemperatur von 150 °C. Die Restfeuchte nach dem Trocknen liegt bei ca. 5 %.

Bei der Trocknung ist darauf zu achten, daß die Restfeuchtigkeit einen Wert von ca. 5 % nicht unterschreitet. Wird bei höheren Temperaturen als 150 °C gearbeitet, so besteht die Gefahr, daß eine zu starke Trocknung erfolgt und bei höheren Verweilzeiten bereits eine Thermofixierung einsetzt. Die Luftdurchlässigkeiten der Gewebe steigen dann an. Beim Arbeiten bei höheren Temperaturen als 150 °C muß also die Verweilzeit beim Trocknen verkürzt werden.

Bei niedrigeren Trocknungstemperaturen besteht zwar nicht die Gefahr des Anstiegs der Luftdurchlässigkeit, hier kann aber die Alterungsbeständigkeit problematisch sein.

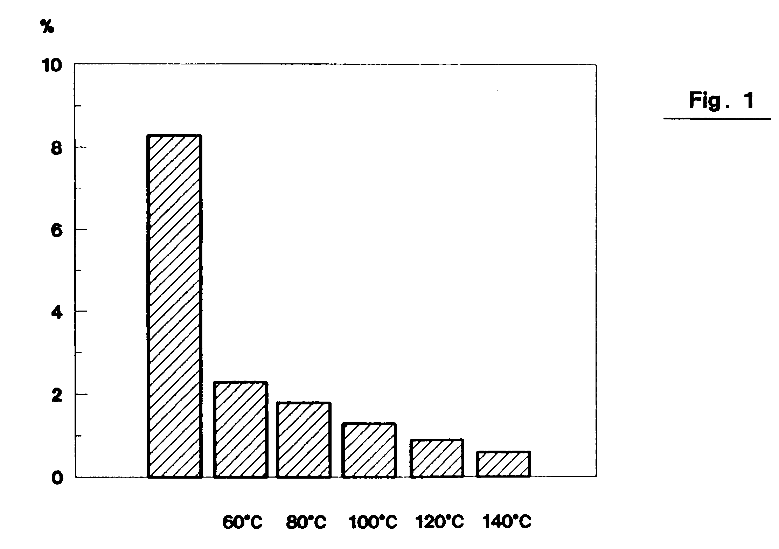

Der Einfluß der Temperatur bei der Naßbehandlung auf den Schrumpf sowie der Einfluß der Trocknungstemperatur auf die Luftdurchlässigkeit sind in den Figuren 1 - 3 dargestellt.

Fig. 1 zeigt in einer Grafik den Restschrumpf eines bei verschiedenen Temperaturen nach dem erfindungsgemäßen Verfahren behandelten Polyamid 6.6-Garnes. Der Restschrumpf wurde als Heißluftschrumpf bei 160 °C Behandlungstemperatur gemessen. Auf der Abszisse sind die Temperaturen der Naßbehandlung in Temperaturintervallen von 20 °C aufgetragen. Auf der Ordinate ist der Restschrumpf dargestellt. Die Grafik zeigt, daß der hohe Ausgangsschrumpf von 8.3 % (linke Säule in der Grafik) bereits bei einer Behandlungstemperatur von 60 °C sehr stark reduziert wird und mit steigender Temperatur der Naßbehandlung weiter abnimmt.

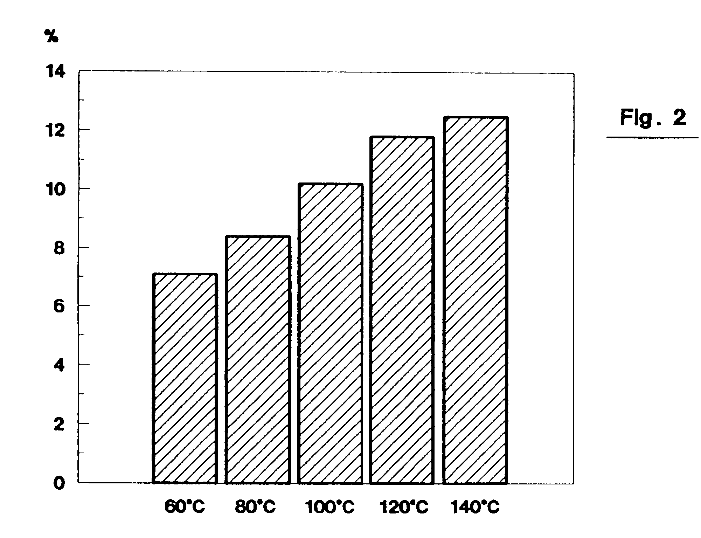

Fig. 2 zeigt die bei der Naßbehandlung erreichte Schrumpfauslösung. Auf der Abszisse sind die Behandlungstemperaturen in Intervallen von 20 °C, auf der Ordinate die erreichte Schrumpfauslösung dargestellt. Die hier gemachten Prozentangaben sind jeweils auf die Ausgangslänge bezogen.

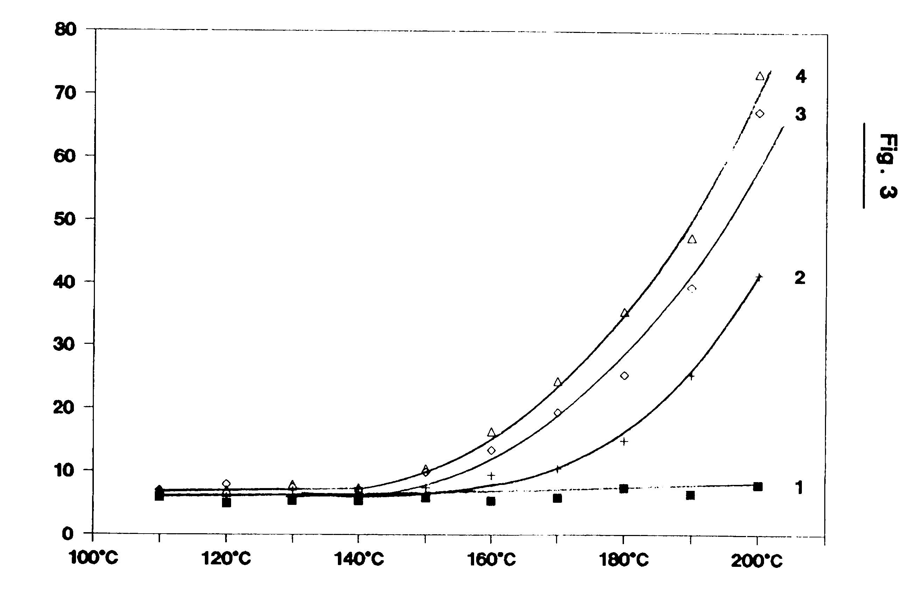

Fig. 3 gibt den Einfluß der Trocknungstemperatur auf die Luftdurchlässigkeit wieder. Auf der Abszisse sind die Trocknungstemperaturen, auf der Ordinate die ermittelten Luftdurchlässigkeiten in l/dm²·min (bei 500 Pa Prüfdifferenzdruck) dargestellt. Die Behandlungszeiten betrugen bei Kurve 1 15 sec, bei Kurve 2 30 sec, bei Kurve 3 45 sec und bei Kurve 4 60 sec. Fig. 3 zeigt deutlich, daß bei einer kurzen Behandlungszeit, unabhängig von der Trocknungstemperatur, niedrige Werte für die Luftdurchlässigkeit erzielt werden. Dagegen setzt bei längeren Behandlungszeiten, besonders bei höheren Temperaturen, bereits eine Thermofixierung ein, die zu einem deutlichen Anstieg der Luftdurchlässigkeit führt. Damit ist auch der Beweis erbracht, daß die im Stand der Technik für Technische Gewebe empfohlene Thermofixierung für Einsatzgebiete, bei denen eine geringe Luftdurchlässigkeit gefordert wird, ein schädlicher Verfahrensschritt ist.

Mit der beschriebenen Behandlung im wäßrigen Bad kann die geforderte niedrige Luftdurchlässigkeit von

$$\leq 10 \ \frac{1}{dm^2 \cdot min}$$

3

voll erfüllt werden. Die Prüfung der Luftdurchlässigkeit erfolgte in Anlehnung an DIN 53 887. In Abweichung von dieser DIN-Norm wurde lediglich der Prüfdifferenzdruck auf 500 Pa erhöht, um bei den erfindungsgemäß hergestellten Geweben noch ein eindeutiges Prüfsignal zu erhalten.

Die an verschiedenen Gewebeproben durchgeführten Messungen haben bei der beschriebenen Behandlung Werte zwischen 3 und 9 l/dm$^2$·min bei 500 Pa Prüfdifferenzdruck ergeben, die somit deutlich unterhalb der von den Automobilherstellern bei Airbags zugelassenen Höchstgrenze von 10 l/dm$^2$·min bei 500 Pa Prüfdifferenzdruck liegen.

Als Fasermaterial für die Herstellung der hier beschriebenen Gewebe ist jede Polyamidfaser, mit der die geforderten Festigkeiten erreicht werden können, geeignet. Die Polyamidfasern kommen in Form von Filamentgarnen zum Einsatz. Als besonders günstig hat sich Polyamid 6.6 erwiesen.

Für Technische Gewebe haben sich Garntiter von 230 - 940 dtex als gut geeignet herausgestellt. Besonders für Airbags finden Titer von 235, 350 oder 470 dtex Verwendung. Die Zahl der Einzelfilamente kann zum Beispiel beim Titer 235 dtex 36, bei 350 oder 470 dtex 72 sein.

Das für die Gewebe-Herstellung eingesetzte Garn weist darüberhinaus vorzugsweise eine Festigkeit von mindestens 60 cN/tex und eine Dehnung von 15 - 30 % bei einem Heißluftschrumpf von 6 - 15 % (gemessen bei 160 °C) auf.

Wie bereits ausgeführt, muß im Interesse einer geringen Luftdurchlässigkeit eine hohe Gewebedichte beim Weben eingestellt werden. Folgende Fadenzahlen haben sich bei einer Leinwandbindung als günstig erwiesen:

| Garntiter | Fadenzahl/cm |
|-----------|--------------|
| 235 f 36  | 26 - 30      |
| 350 f 72  | 18 - 28      |
| 470 f 72  | 18 - 25      |

Die Gewebe werden bevorzugt in Leinwandbindung mit symmetrischer Einstellung hergestellt. Für feinere Titer kann, im Interesse eines ansprechenden Warengriffes, auch eine Panamabindung 2/2 in symmetrischer Einstellung gewählt werden. Hier wird dann bei einem Titer von 350 f 72 mit Fadenzahlen von 25 - 36/cm und bei einem Titer von 235 f 36 mit Fadenzahlen von 32 - 40/cm gearbeitet.

Symmetrische Einstellung des Gewebes heißt, daß Kette und Schuß wenigstens im wesentlichen gleiche Fadenzahlen aufweisen, wobei die Kettfäden und die Schußfäden zumindest annähernd die gleichen textilen Eigenschaften wie Titer, Festigkeit, Bruchdehnung und Heißluftschrumpf aufweisen. Die symmetrische Einstellung des Gewebes gestattet es, die Forderung nach in Kette und Schuß gleichen Festigkeiten auf einfache Weise zu erfüllen. Diese Forderung wird besonders von den Automobilherstellern bei Airbags erhoben, da es sich beim Airbag um ein radialsymmetrisches Bauteil ohne Vorzugsrichtung handelt.

Mit der beschriebenen Verfahrensweise können die geforderten Luftdurchlässigkeiten problemlos erreicht werden, wie die nachstehende Tabelle deutlich zeigt:

| Versuch Nr. | 1 | 2 | 3 | 4 |
|---|---|---|---|---|
| Garntiter | 350 f 72 | 470 f 72 | 470 f 72 | 350 f 72 |
| Gewebebindung | Leinwand | Leinwand | Leinwand | Panama 2/2 |
| **Rohgewebe:** | | | | |
| Fadenzahl/cm | | | | |
| – Kette | 24.0 | 20.5 | 19.5 | 27.0 |
| – Schuß | 22.0 | 19.5 | 19.2 | 30.0 |
| Gewebebreite cm | 163 | 147 | 156 | 159 |
| **Fertiggewebe:** | | | | |
| Fadenzahl/cm | | | | |
| – Kette | 27.5 | 23.0 | 21.0 | 32.0 |
| – Schuß | 24.8 | 22.0 | 20.4 | 33.0 |
| Gewebebreite cm | 151 | 136 | 144 | 142.5 |
| Luftdurchlässigkeit l/dm²·min bei 500 Pa | 3 | 3 | 8 | 7.5 |

Die in der Tabelle wiedergebenen Versuche wurden mit Geweben aus Polyamid 6.6-Fiamentgarnen durchgeführt. Die Behandlung im wäßrigen Bad erfolgte auf einem Jigger. Die Behandlungstemperatur lag jeweils bei 95 °C.

Der erhaltene niedrige Wert für die Luftdurchlässigkeit ändert sich auch bei dem von den Automobilherstellern für Airbag-Gewebe empfohlenen Alterungstest nur unwesentlich. Bei diesem Test wird das Gewebe 100 Stunden bei 105 °C gelagert und anschließend einer Prüfung der Luftdurchlässigkeit unterzogen.

Eine zusätzliche Thermofixierung ist nicht nötig. Die durchgeführten Versuche haben sogar gezeigt, daß hiermit keine weitere Verringerung der Luftdurchlässigkeit erreicht wird, sondern daß durch die Thermofixierung sogar eine Erhöhung der Werte eintritt. Die im Stand der Technik für Technische Gewebe empfohlene Thermofixierung Ist also für Gewebe, bei denen eine niedrige Luftdurchlässigkeit gefordert wird, ein schädlicher Verfahrensschritt.

Die Vorteile des erfindungsgemäßen Gewebes wirken sich bei der Verwendung im Kontaktteil des Airbags in einem sichereren, in wesentlichen Punkten gegenüber den bisherigen Systemen verbesserten, den Spezifikationen der Automobilhersteller entsprechenden und somit verkaufsfähigen Airbag-System aus. Unter Airbag-System ist der Airbag selbst, die Unterbringung des Airbags im Kraftfahrzeug sowie das Steuerungssystem zum Auslösen der Airbag-Funktion zu verstehen.

**Beispiel 1**

Polyamid 6.6-Filamentgarne mit Titer 350 f 72 wurden in Leinwandbindung zu einem Gewebe verarbeitet. Das eingesetzte Garn hatte einen Heißluftschrumpf (gemessen bei 160 °C) von 8,2 %. Die Fadenzahl betrug in der Kette 24/cm, im Schuß 23/cm.
Das Gewebe wurde einer Naßbehandlung auf einem Jigger bei 90 °C unterzogen und anschließend bei 150 °C getrocknet. Die Trocknungszeit betrug 30 sec. Die Restfeuchtigkeit des Gewebes lag nach dem Trocknen bei 4,8 %.
Das so hergestellte Gewebe zeigte eine Luftdurchlässigkeit von 7.5 l/dm²·min bei 500 Pa Prüfdifferenzdruck.

**Beispiel 2**

Das gemäß Beispiel 1 hergestellte Gewebe wurde auf einem Jigger einer Naßbehandlung nahe Kochtemperatur (97 °C) unterzogen. Die so behandelten Gewebe wurden je 30 sec bei 130 °C, 150 °C, 170 °C und 190 °C getrocknet. An den erhaltenen Geweben wurden folgende Luftdurchlässigkeiten gemessen:

| Trockner-Temperatur °C | Luftdurchlässigkeit l/dm²·min bei 500 Pa Prüfdifferenzdruck |
|---|---|
| 130 | 6 |
| 150 | 6,5 |
| 170 | 8 |
| 190 | 21 |

Ein weiterer Gewebeabschnitt aus diesem Versuch wurde bei 170 °C mit unterschiedlichen Verweilzeiten getrocknet. Hierbei wurden folgende Luftdurchlässigkeiten erhalten:

| Verweilzeit bei 170 °C sec | Luftdurchlässigkeit l/dm²·min bei 500 Pa Prüfdifferenzdruck |
|---|---|
| 15 | 5,5 |
| 30 | 8 |
| 45 | 15 |
| 60 | 19 |

Die hier wiedergegebenen Versuchsergebnisse zeigen deutlich, daß mit höherer Trocknungstemperatur keine Verringerung der Luftdurchlässigkeit, sondern eine Erhöhung eintritt. Bei höheren Temperaturen wird bereits eine Thermofixierung ausgelöst Gleiches gilt für längere Verweilzeiten, wenn bei relativ hohen Trocknungstemperaturen gearbeitet wird.
Damit läßt sich belegen, daß die im Stand der Technik für Technische Gewebe, bei denen eine geringe Luftdurchlässigkeit gefordert wird, empfohlene Thermofixierung ein nicht notwendiger und sogar schädlicher Verfahrensschritt ist.

**Beispiel 3**

Ein Gewebe gemäß Beispiel 1 wurde einer Naßbehandlung auf einem HT-Jigger unterzogen. Die Behandlungstemperatur betrug 138 °C. Die Trocknungsbedingungen entsprachen den in Beispiel 1 genannten.
An dem erhaltenen Gewebe wurde eine Luftdurchlässigkeit von 4,5 l/dm²·min bei 500 Pa Prüfdifferenzdruck gemessen.

**Patentansprüche**

1.	Verfahren zur Herstellung von unbeschichteten technischen Geweben mit dichter Gewebeeinstellung, dadurch gekennzeichnet,

daß ein Gewebe aus Polyamid-Filamentgarnen
mit einem Heißluftschrumpf von 6 bis 15 % (gemessen bei 160°C)
mit wenigstens im wesentlichen symmetrischer Gewebeeinstellung
einer zu einem weitgehenden Porenschluß des Gewebes führenden Behandlung durch Schrumpfauslösung in einem wäßrigen Bad
in einem Temperaturbereich von 60 bis 140°C unterzogen wird
und anschließend eine Trocknung ohne Thermofixierung erfolgt.

2. Verfahren nach Anspruch 1, dadurch gekennzeichnet, daß die Behandlung im wäßrigen Bad bei einer Temperatur im Bereich von 90 - 140 °C durchgeführt wird.

3. Verfahren nach Anspruch 1, dadurch gekennzeichnet, daß die Behandlung im wäßrigen Bad bei einer Temperatur im Bereich von 90 - 100 °C durchgeführt wird.

4. Verwendung eines Gewebes, hergestellt nach einem der Ansprüche 1 bis 3, für Artikel, bei denen eine geringe Luftdurchlässigkeit gefordert wird.

5. Verwendung eines Gewebes, hergestellt nach einem der Ansprüche 1 bis 3, zur Herstellung eines Airbags.

6. Verwendung eines Gewebes, hergestellt nach einem der Ansprüche 1 bis 3, als Fallschirm-Gewebe.

7. Verwendung eines Gewebes, hergestellt nach einem der Ansprüche 1 bis 3, als Segelgewebe.

8. Airbagsystem, gekennzeichnet durch ein Gewebe, hergestellt nach einem der Ansprüche 1 bis 3.

## Claims

1. Method of manufacturing uncoated industrial fabrics with a close weave setting,
characterized in

   that a woven fabric made of polyamide filament yarns with a hot air shrinkage of 6 - 15% (measured at 160°C) with an at least substantially symmetrical weave setting
   is subjected to a treatment leading to extensive closure of the pores of the woven fabric through initiation of shrinkage in an aqueous bath
   at a temperature in the range of 60 - 140°C
   and then drying without thermofixing is effected.

2. Method according to claim 1, characterized in that the treatment in the aqueous bath is carried out at a temperature in the range of 90 - 140°C.

3. Method according to claim 1, characterized in that the treatment in the aqueous bath is carried out at a temperature in the range of 90 - 100°C.

4. Use of a woven fabric, manufactured according to one of claims 1 to 3, for articles in which a low air permeability is required.

5. Use of a woven fabric, manufactured according to one of claims 1 to 3, to manufacture an air bag.

6. Use of a woven fabric, manufactured according to one of claims 1 to 3, as a parachute fabric.

7. Use of a woven fabric, manufactured according to one of claims 1 to 3, as a sail fabric.

8. Air bag system, characterized by a woven fabric manufactured according to one of claims 1 to 3.

**Revendications**

1. Procédé de fabrication de tissus techniques non enduits à compte de fils élevé, caractérisé par le fait que l'on soumet un tissu formé de filés de filaments de polyamides présentant une contraction à l'air chaud de 6 - 15 % (mesurée à 160 °C), avec un compte de fils au moins essentiellement symétrique, à un traitement menant dans une large mesure à une fermeture des pores par déclenchement d'une contraction, dans un bain aqueux à une température comprise entre 60 et 140 °C, puis on le sèche sans fixation thermique.

2. Procédé selon la revendication 1, caractérisé par le fait que le traitement dans le bain aqueux est réalisé à une température comprise entre 90 et 140 °C.

3. Procédé selon la revendication 1, caractérisé par le fait que le traitement dans le bain aqueux est réalisé à une température comprise entre 90 et 100 °C.

4. Utilisation d'un tissu fabriqué conformément à l'une des revendications 1 à 3 pour des articles dans lesquels une faible perméabilité à l'air est nécessaire.

5. Utilisation d'un tissu fabriqué conformément à l'une des revendications 1 à 3 pour la fabrication d'un sac gonflable.

6. Utilisation d'un tissu fabriqué conformément à l'une des revendications 1 à 3 comme toile pour parachute.

7. Utilisation d'un tissu fabriqué conformément à l'une des revendications 1 à 3 comme toile pour voile.

8. Système de sac gonflable caractérisé par un tissu fabriqué selon l'une des revendications 1 à 3.

Fig. 1

Fig. 2

## Fig. 3